(19) Europäisches Patentamt
European Patent Office
Office européen des brevets

(11) **EP 1 893 665 B1**

(12) **EUROPEAN PATENT SPECIFICATION**

(45) Date of publication and mention
of the grant of the patent:
**11.03.2009 Bulletin 2009/11**

(21) Application number: **06763293.5**

(22) Date of filing: **25.05.2006**

(51) Int Cl.:
*C08G 63/00* (2006.01)     *C08K 3/00* (2006.01)
*C08L 67/00* (2006.01)

(86) International application number:
**PCT/EP2006/062632**

(87) International publication number:
**WO 2006/125824 (30.11.2006 Gazette 2006/48)**

(54) **POLYESTER ORGANO IRON COMPOSITIONS**

POLYESTER-ORGANOEISEN-ZUSAMMENSETZUNGEN

COMPOSITIONS ORGANO-FERREUSES DE POLYESTER

(84) Designated Contracting States:
**AT BE BG CH CY CZ DE DK EE ES FI FR GB GR HU IE IS IT LI LT LU LV MC NL PL PT RO SE SI SK TR**

(30) Priority: **26.05.2005 US 685096 P**

(43) Date of publication of application:
**05.03.2008 Bulletin 2008/10**

(73) Proprietor: **M & G Polimeri Italia S.P.A.**
**03010 Patrica (FR) (IT)**

(72) Inventors:
• **AL GHATTA, Hussain**
**I-03014 Fiuggi (Frosinone) (IT)**

• **BLACK, Jeffrey D.**
**Akron, Ohio 44312 (US)**

(74) Representative: **Gerbino, Angelo et al**
**Jacobacci & Partners S.p.A.**
**Corso Emilia, 8**
**10152 Torino (IT)**

(56) References cited:
**WO-A-91/17044          US-A- 5 159 005**
**US-A- 5 804 236          US-B1- 6 274 210**

• **PATENT ABSTRACTS OF JAPAN vol. 2000, no. 06, 22 September 2000 (2000-09-22) & JP 2000 086751 A (TORAY IND INC), 28 March 2000 (2000-03-28)**

**Description**

Priority and Cross References

This patent application claims the benefit of the priority of United States Provisional Patent Application Serial No. 60/685,096 filed May 26, 2005 the teachings of which are incorporated in their entirety.

Field of the Invention

This invention relates to the composition according to present claim 1 of at least one metal compound wherein the metal is selected from the group consisting of organo iron-metallo compounds and melt blended with a polyester and a polyamide to form an article such as a container wall.

Background of the Invention

Products sensitive to oxygen, particularly foods, beverages and medicines, deteriorate or spoil in the presence of oxygen. One approach to creating an oxygen free environment is to package such products in a container comprising at least one layer of a so-called "passive" gas barrier film that acts as a physical barrier and reduces or eliminates the transmission of oxygen through the container wall but does not react with oxygen. For instance, layers of thermoplastic polyester (PET) are often supplemented with additional layers of packaging material to prevent oxygen permeability.

As packaging demands become more complex, multiple components are needed to increase the functional properties of the package. Barrier to vapor or specific compounds such as oxygen is one of the more important of these properties. Oxygen barrier materials are expensive and it is therefore desirable to minimize their cost in the final package.

Reduced rates of oxygen transmission can be achieved using passive or active barrier techniques. Passive barrier techniques reduce the transmission rate of the vapor or liquid into the package. By contrast, active barrier techniques incorporate material(s) into the wall of the package that react(s) with the vapor or liquid of concern and thus prevents their passage through the container wall.

Current packages integrate the passive barrier material into a separate layer in the wall of the container. This is accomplished by using one extruder to melt a major component and form the article while a second extruder melts the barrier material and injects the barrier material in a separate layer of the article that forms the wall of the container. United States Patent 4,501,781, for example, describes improving passive barrier properties by incorporating a polyamide layer and a polyester layer to make a multi-layer container. United States Patent 4,501,781 also teaches that the polyamide can be homogeneously blended with the polyester in the container wall as opposed to the polyamide being placed in a separate layer.

The active barrier technique, as described in United States Patent 5,021,515, involves the reaction of a component in the wall of a container with oxygen. Such a reaction has come to be known as oxygen scavenging. United States Patents 5,021,515, 5,049,624, and 5,639,815 disclose packaging materials and processes utilizing polymer compositions capable of scavenging oxygen; such compositions include an oxidizable organic polymer component, preferably a polyamide (more preferably m-xylylene adipamide, commonly referred to as MXD6) and a metal oxidation promoter (such as a cobalt compound).

United States Patent 5,529,833 describes a composition comprising an ethylenically unsaturated hydrocarbon oxygen scavenger catalyzed by a promoter such as a transition metal catalyst and a chloride, acetate, stearate, palmitate, 2-ethylhexanoate, neodecanoate or naphthenate counterion. Cobalt (II) 2-ethylhexanoate and cobalt (II) neodecanoate are effective metal salts.

United States Patent Numbers 6,406,766, 6,558,762, 6,346,308, 6,365,247, and 6,083,585 teach to functionalize the oxidizable component such as a polybutadiene oligomer and react it into the backbone of the major polymer matrix, such as polyethylene terephthalate (PET). Such a composition may be incorporated into the wall of the container as a separate layer of the container wall or comprise the entire wall.

Elemental or reduced metal scavengers are other active barrier techniques. These metals, usually in the presence of a promoter such as sodium chloride, are not reactive with oxygen until exposed to moisture that triggers the reaction. The advantage of the metal scavenger is that a pellet containing a metal based scavenger will not react with oxygen unless placed in contact with moisture, a component that is external to the pellet. The use of an agent external to the pellet composition to initiate the reaction makes this a triggerable system. This is in stark contrast to the previously discussed organic systems which are active when the ingredients are combined to make the container or pellet. It is noted that there are some oxygen reactive compounds that have both an inherent reactivity with oxygen and also have a promotable and/or a triggerable reactivity as well.

Summary

This specification discloses a thermoplastic composition comprising a polyester and an organo-iron compound as claimed wherein the iron is selected from the group consisting of iron(II) or iron (III) and the organo-iron compound is present at a level greater than 10ppm of the polymer components in the composition. The specification further discloses that the polyester be a crystallizable polyethylene terephthalate and that the organo-iron compound be selected from the group consisting of iron(II) acetylacetonate and iron (III) acetylacetonate. It is further disclosed that the composition further comprise a polyamide where the polyamide is the reaction product of amino caproic acid with itself or A-D where A is a residue of dicarboxylic acid comprising adipic acid, isophthalic acid, terephthalic acid, 1,4-cyclohexanedicarboxylic acid, resorcinol dicarboxylic acid, or naphthalene dicarboxylic acid, or a mixture thereof and D, where D is a residue of a diamine comprising m-xylylene diamine, p-xylylene diamine, hexamethylene diamine, ethylene diamine, or 1,4 cyclohexanedimethylamine, or a mixture thereof. Also disclosed are articles such a fiber, sheet, film, preform, or layer of the wall of a container made from the polyester organo-iron compositions.

Detailed Description

High oxygen barrier is achieved by incorporating the acetylacetonates of Fe(II) and Fe(III) into the polyester-polyamide melt blend.

Polyamides suitable for this invention can be described as comprising the repeating unit amino caproic acid or A-D, wherein A is the residue of a dicarboxylic acid comprising adipic acid, isophthalic acid, terephthalic acid, 1,4-cyclohexanedicarboxylic acid, resorcinol dicarboxylic acid, or naphthalene dicarboxylic acid, or a mixture thereof, and D is a residue of a diamine comprising m-xylylene diamine, p-xylylene diamine, hexamethylene diamine, ethylene diamine, or 1,4 cyclohexanedimethylamine, or a mixture thereof.

These polyamides can range in number average molecular weight from 2000 to 60,000 as measured by end-group titration. These polyamides can also be described as the reaction product of amino caproic acid with itself and/or the reaction product of a residue of dicarboxylic acid comprising adipic acid, isophthalic acid, terephthalic acid, 1,4-cyclohexanedicarboxylic acid, resorcinol dicarboxylic acid, or naphthalene dicarboxylic acid, or a mixture thereof with a residue of a diamine comprising m-xylylene diamine, p-xylylene diamine, hexamethylene diamine, ethylene diamine, or 1,4 cyclohexanedimethylamine, or a mixture thereof.

Those, skilled in the art will recognize many of the combinations as well known commercially available polyamides. The reaction product of the residues of sebacic acid with hexamethylene diamine is nylon 610 and the reaction product of the residues of adipic acid and hexamethylene diamine is nylon 66. Nylon 612 is another nylon which benefits from the invention. Nylon 6 is a special type of polyamide which is made by the opening of caprolactam and then polymerizing the resulting amino caproic acid which has a formula of $H_2N\text{-}(CH_2)_5\text{-}COOH$. The preferred polyamide is the reaction product of the residues of adipic acid and m-xylylene diamine, known as poly-m-xylylene adipamide. This product is commercially known as MXD6 or nylon MXD6 and can be purchased from Mitsubishi Gas Chemical Company, Japan.

The polyesters may be prepared, for example, by melt phase polymerization involving the reaction of a diol with a dicarboxylic acid, or its corresponding diester. Various copolymers resulting from use of multiple diols and diacids may also be used. Polymers containing repeating units of only one chemical composition are homopolymers. In this case, the homopolymer would be from 100 percent polar compound. Polymers with two or more chemically different repeat units in the same macromolecule are termed copolymers. The diversity of the repeat units depends on the number of different types of monomers present in the initial polymerization reaction. In the case of polyesters, copolymers include reacting one or more diols with a diacid or multiple diacids, and are sometimes referred to as terpolymers.

As noted hereinabove, suitable dicarboxylic acids include those comprising from about 4 to about 40 carbon atoms. Specific dicarboxylic acids include, but are not limited to, terephthalic acid, isophthalic acid, naphthalene 2,6-dicarboxylic acid, cyclohexanedicarboxylic acid, cyclohexanediacetic acid, diphenyl-4,4'-dicarboxylic acid, 1,3-phenylenedioxydiacetic acid, 1,2-phenylenedioxydiacetic acid, 1,4-phenylenedioxydiacetic acid, succinic acid, glutaric acid, adipic acid, azelaic acid, sebacic acid, and the like. Specific esters include, but are not limited to, phthalic esters and naphthalic diesters.

These acids or esters may be reacted with an aliphatic diol preferably having from about 2 to about 24 carbon atoms, a cycloaliphatic diol having from about 7 to about 24 carbon atoms, an aromatic diol having from about 6 to about 24 carbon atoms, or a glycol ether having from 4 to 24 carbon atoms. Suitable diols include, but are not limited to, ethylene glycol, 1,4-butenediol, trimethylene glycol, 1,6-hexanediol, 1,4-cyclohexanedimethanol, diethylene glycol, resorcinol, and hydroquinone.

Polyfunctional comonomers can also be used, typically in amounts of from about 0.01 to about 3 mole percent. Suitable comonomers include, but are not limited to, trimellitic anhydride, trimethylolpropane, pyromellitic dianhydride (PMDA), and pentaerythritol. Polyester-forming polyacids or polyols can also be used. Blends of polyesters and copolyesters may also be useful in the present invention.

Polyethylene terephthalate is a particularly effective polyester. Copolymers of polyethylene terephthalate are also effective. Specific copolymers and terpolymers of interest are polyethylene terephthalate modified with isophthalic acid or its diester, 2, 6 naphthalic acid or its diester, and/or cyclohexane dimethanol. Crystallizable polyethylene terephthalate is also suitable. The crystallizable polyethylene terephthalate has at least 85 mole % of the number of moles of acid groups derived from terephthalate and at least 85 mole % of the number of moles of alcohol or glycol groups derived from ethylene glycol and the total mole percent of the non-terephthalate and non-glycol moieties does not exceed 15 mole percent of the total number of moles of all monomers.

The esterification or polycondensation reaction of the carboxylic acids or esters with glycol typically takes place in the presence of a catalyst. Suitable catalysts include, but are not limited to, antimony oxide, antimony triacetate, antimony ethylene glycolate, organomagnesium, tin oxide, titanium alkoxides, dibutyl tin dilaurate, and germanium oxide. These catalysts may be used in combination with zinc, manganese, or magnesium acetates or benzoates. Catalysts comprising antimony are preferred.

Another polyester of interest is polytrimethylene terephthalate (PTT). It can be prepared by, for example, reacting 1,3-propanediol with at least one aromatic diacid or alkyl ester thereof. Preferred diacids and alkyl esters include terephthalic acid (TPA) or dimethyl terephthalate (DMT). Accordingly, the PTT preferably comprises at least about 80 mole percent of either TPA or DMT. Other diols which may be copolymerized in such a polyester include, for example, ethylene glycol, diethylene glycol, 1,4-cyclohexane dimethanol, and 1,4-butanediol. In addition to the polar compound such as sulfoisophthalic acid, other aromatic and aliphatic acids which may be used simultaneously to make a copolymer include, for example, isophthalic acid and sebacic acid.

Catalysts for preparing PTT include titanium and zirconium compounds. Suitable catalytic titanium compounds include, but are not limited to, titanium alkylates and their derivatives, titanium complex salts, titanium complexes with hydroxycarboxylic acids, titanium dioxide-silicon dioxide-co-precipitates, and hydrated alkaline-containing titanium dioxide. Specific examples include tetra-(2-ethylhexyl)-titanate, tetrastearyl titanate, diisopropoxy-bis(acetyl-acetonato)-titanium, di-n-butoxy-bis(triethanolaminato)-titanium, tributylmonoacetyltitanate, triisopropyl monoacetyltitanate, tetrabenzoic acid titanate, alkali titanium oxalates and malonates, potassium hexafluorotitanate, and titanium complexes with tartaric acid, citric acid or lactic acid. Preferred catalytic titanium compounds are titanium tetrabutylate and titanium tetraisopropylate. The corresponding zirconium compounds may also be used.

The polyester polymer of this composition may also contain small amounts of phosphorous compounds, such as phosphates, and a catalyst such as a cobalt compound, that tends to impart a blue hue. Also, small amounts of other polymers such as polyolefins can be tolerated in the continuous matrix.

After completion of the melt phase polymerization, the polyester is either made into a form such as a film or part or stranded and cut into smaller chips, such as pellets. The polymer is usually then crystallized and subjected to a solid phase (solid state) polymerization (SSP) step to achieve the intrinsic viscosity necessary for the manufacture of certain articles such as bottles. The crystallization and polymerization can be performed in a tumbler dryer reaction in a batch-type system. The solid phase polymerization can continue in the same tumble dryer where the polymer is subjected to high vacuum to extract the polymerization by-products.

Alternatively, the crystallization and polymerization can be accomplished in a continuous solid state process whereby the polymer flows from one vessel to another after its predetermined treatment in each vessel. The crystallization conditions are relative to the polymer's crystallization and sticking tendencies. However, preferable temperatures are from about 100°C to about 150°C. In the case of crystallisable polyesters, the solid phase polymerization conditions are generally 10°C below the melt point of the polymer. In the case of non-crystallisable polyesters, the solid phase polymerization temperature is 10°C below temperature where the polymer begins sticking to itself. Traditional solid phase polymerization temperatures for crystallisable polymers range from about 200 °C to about 232°C, and more preferably from about 215°C to about 232°C. Those skilled in the art will realize that the optimum solid phase polymerization temperature is polymer specific and depends upon the type and amount of copolymers in the product. However, determination of the optimum solid phase polymerization conditions is frequently done in industry and can be easily done without undue experimentation.

The solid phase polymerization may be carried out for a time sufficient to raise the intrinsic viscosity to the desired level, which will depend upon the application. For a typical bottle application, the preferred intrinsic viscosity is from about 0.65 to about 1.0 deciliter/gram, as determined by the method described in the methods section. The time required to reach this viscosity may range from about 8 to about 21 hours.

Raising the intrinsic viscosity can be accomplished using the multi-compartment pellet technique as described in WO 2005/110694 titled "Compartmentalized Resin Pellets", published 24 November 2005 titled "Compartmentalized Resin Pellets", the teachings of which are incorporated herein. This involves using the core-sheath design wherein the core comprises polyamide and the sheath comprises polyester. The organo-metallic acetylacetonate can be placed in any of the zones. The polyester-polyamide-organometallic acetylacetonate composition is then created during melt fabrication of the article when the pellets are melted and extruded.

In one embodiment of the invention, the polyester and polyamide of the present invention may comprise recycled polyester or recycled polyamide materials derived from recycled polymers, such as monomers, catalysts, and oligomers. Specifically contemplated is use of the metal compound to compatiblize the polyamide that is not separated from the polyester when multi-layered polyester/polyamide containers are recycled.

The organo-iron compound can be added directly to the polyester or polyamide or both. The addition to either polymer can occur at any step where one of the polymer streams is in its liquid state such as melt polymerization. The combination of the three components can occur in a separate compounding of the individual polymers or melt-fabrication operation, such as the extrusion section where the polyamide and polyester are melt mixed and the polyamide dispersed into the polyester and the molten mixture then advanced to an article.

The article is often a preform or cast film or sheet using any of the well known techniques. The article is then stretched into a final product, usually a container. In the case of the preform, the container is made by blowing the preform when the preform is at a temperature above the glass transition of the polyester which stretches the composition into the shape of the container mold. Film or sheet is usually mechanically stretched at temperatures above the polyester glass transition temperature.

Containers having at least one wall incorporating the composition of the present invention are the preferred articles. Cups, pouches, boxes, bottles, lids and wrapped films are also examples of such walls. Stretched and unstretched films are included in the definition of container walls.

It is also contemplated to provide articles of a multilayer construction where at least one layer of the wall contains the claimed composition.

The following examples are provided for the purpose of illustrating the manufacture of the composition, the articles and containers. Also shown is the effect of composition's properties in the stretched wall. The examples are not intended to limit the scope of the invention. The polyester resin used in the examples was CLEARTUF® MAX from M&G Polymers, LLC, USA. CLEARTUF® MAX is an 0.84 Intrinsic Viscosity (I.V.) bottle grade copolyethylene terephthalate. The polyamide used in the examples was poly (m-xylxylene adipamide) MXD6 Grade 6007 from Mitsubishi Gas Chemical, Japan.

The compositions were prepared by tumble blending dry polyamide, dry polyester and the organo-metallic compound in a single container in the ratios and amounts noted in Table I. After thoroughly combining the ingredients, the container's contents were fed into an Arburg injection molding extruder to melt mix the ingredients. The Arburg melt mixed and melt extruded the polyester and polyamide with the organo iron-metallic compound. The Arburg machine then extruded and injected the new composition into a 27 gram preform. The preform was later reheat blown into a 1.5 Liter bottle and the bottle sidewall measured for oxygen scavenging.

These polyester and polyamide-polyester compositions were also evaluated for their ability to scavenge oxygen. The data demonstrate that the iron-polyester mixture scavenges oxygen in the absence of traditional oxidizable organics. The examples of polyester-polyamide and iron also show no increased oxygen scavenging over the polyester iron complex alone.

Table I Iron Oxygen Scavenging

| Organo-Metallo Compound Type | INGREDIENT AMOUNTS | | $O_2$ Reacted after 7 Days at 50°C. (cc$O_2$/gm composition) | |
|---|---|---|---|---|
| | MXD6 (wt % added to blend) | Organo-Metallo Compound in ppm of Metal | dry | wet |
| | | | | |
| Control | 0 | | | 0.024 |
| Fe+3 | 0 | 1000 | 0.295 | 0.26 |
| Fe+3 | 5% | 1000 | 0.257 | 0.278 |
| Fe+3 | 0 | 500 | 0.148 | 0.163 |
| Fe+3 | 0 | 2000 | 0.455 | 0.441 |
| Fe+2 | 0 | 1000 | | 0.233 |

Test Methods:

Intrinsic Viscosity

The intrinsic viscosity of intermediate molecular weight and low crystalline poly(ethylene terephthalate) and related polymers which are soluble in 60/40 phenol/tetrachloroethane was determined by dissolving 0.1 grams of polymer or ground pellet into 25 ml of 60/40 phenol/tetrachloroethane solution and determining the viscosity of the solution at 30 °C +/-0.05 relative to the solvent at the same temperature using a Ubbelohde 1B viscometer. The intrinsic viscosity is calculated using the Billmeyer equation based upon the relative viscosity.

The intrinsic viscosity of high molecular weight or highly crystalline poly(ethylene terephthalate) and related polymers which are not soluble in phenol/tetrachloroethane was determined by dissolving 0.1 grams of polymer or ground pellet into 25 ml of 50/50 trifluoroacetic Acid/Dichloromethane and determining the viscosity of the solution at 30 °C +/- 0.05 relative to the solvent at the same temperature using a Type OC Ubbelohde viscometer. The intrinsic viscosity is calculated using the Billmeyer equation and converted using a linear regression to obtain results which are consistent with those obtained using 60/40 phenol/tetrachloroethane solvent. The linear regression is

$$\text{IV (in 60/40 phenol/tetrachloroethane)} =$$

$$0.8229 \text{ x IV (in 50/50 trifluoroacetic Acid/Dichloromethane)} + 0.0124.$$

A Panametrics Magna-Mike 8000 Hall Effect Thickness Gauge was employed to measure the bottle sidewall thickness.

Oxygen Absorbance Test - Polymer Samples

Bottle sidewall samples are cut to a predetermined size with a template and the sidewall sample weights (to the nearest 0.01 g) are recorded. The samples are placed into 20 ml vials, activated with 2 ml of aqueous 0.001 M acetic acid and crimp sealed. The sidewall samples are stored at the specified temperature. The individual tubes are analysed by gas chromatography for consumption of oxygen vs. a control at the prescribed time interval. Each point is the average of three individual determinations.

**Claims**

1. A thermoplastic composition comprising a polyester and a metallo organic compound where the metal is selected from the group consisting of iron (II) or iron (III) and the metallo organic compound is present at a level greater than 10ppm of the polymer components in the composition and is selected from the group consisting of iron(II) acetylacetonate and iron (III) acetylacetonate.

2. The composition of claim 1 where the polyester is a crystallizable polyethylene terephthalate.

3. The composition of claim 2 which further comprises a polyamide where the polyamide is the reaction product of amino caproic acid with itself or A-D where A is a residue of dicarboxylic acid comprising adipic acid, isophthalic acid, terephthalic acid, 1,4-cyclohexanedicarboxylic acid, resorcinol dicarboxylic acids, or naphthalene dicarboxylic acid, or a mixture thereof and D, where D is a residue of a diamine comprising m-xylylene diamine, p-xylylene diamine, hexamethylene diamine, ethylene diamine, or 1,4 cyclohexanedimethylamine, or a mixture thereof.

4. The composition of claim 3 wherein the polyamide is MXD6 nylon.

5. An article comprising the composition of claims 1-4 wherein the article is a fiber, sheet, film, preform, or layer of the wall of a container.

**Patentansprüche**

1. Thermoplastische Zusammensetzung umfassend einen Polyester und eine metallo-organische Verbindung, wobei das Metall aus der Gruppe bestehend aus Eisen (II) oder Eisen (III) ausgewählt ist und die metallo-organische Verbindung in einer Menge größer als 10ppm der Polymer-Bestandteile in der Zusammensetzung anwesend ist und aus der Gruppe bestehend aus Eisen (II) Acetylacetonat und Eisen (III) Acetylacetonat ausgewählt ist.

2. Zusammensetzung nach Anspruch 1, wobei das Polyester ein krystallisierbares Polyethylen-Therephthalat ist.

3. Zusammensetzung nach Anspruch 2, die weiterhin ein Polyamid umfasst, wobei das Polyamid das Reaktionsprodukt von Aminocapronsäure mit sich selbst oder A-D ist, wobei A ein Rest von Dicarbonsäure ist, umfassend Adipinsäure, Isophthalsäure, Therephthalsäure, 1,4-Cyclohexandicarbonsäure, Resorcin-Dicarbonsäure oder Naphthalin-Dicarbonsäure oder eine Mischung davon und D, wobei D ein Rest von Diamin ist, umfassend m-Xylylendiamin, p-Xylylendiamin, Hexamethylendiamin, Ethylendiamin oder 1,4-Cyclohexandimethylamin oder eine Mischung davon.

4. Zusammensetzung nach Anspruch 3, wobei das Polyamid MXD6-Nylon ist.

5. Artikel umfassend die Zusammensetzung nach den Ansprüchen 1-4, wobei der Artikel eine Faser, Fläche, Film, Vorform oder Schicht der Wand eines Behälters ist.


**Revendications**

1. Composition thermoplastique comprenant un polyester et un composé organométallique, où le métal est choisi dans le groupe constitué par le fer(II) ou le fer(III) et le composé organométallique est présent à un taux supérieur à 10 ppm des composants polymères dans la composition et est choisi dans le groupe constitué par l'acétylacétonate de fer(II) et l'acétylacétonate de fer(III).

2. Composition selon la revendication 1, dans laquelle le polyester est un polyéthylène téréphtalate cristallisable.

3. Composition selon la revendication 2, qui comprend en outre un polyamide, le polyamide étant le produit réactionnel de l'acide aminocaproïque avec lui-même ou bien A-D, où A est un résidu d'acide dicarboxylique comprenant l'acide adipique, l'acide isophtalique, l'acide téréphtalique, l'acide 1,4-cyclohexane dicarboxylique, l'acide résorcinol dicarboxylique, ou l'acide naphtalène dicarboxylique, ou un mélange de ceux-ci, et D, où D est un résidu d'une diamine comprenant la m-xylylène diamine, la p-xylylène diamine, l'hexaméthylène diamine, l'éthylène diamine, ou la 1,4-cyclohexane diméthylamine, ou un mélange de celles-ci.

4. Composition selon la revendication 3, dans laquelle le polyamide est le nylon MXD6.

5. Article comprenant la composition selon les revendications 1 à 4, dans lequel l'article est une fibre, une feuille, un film, un préformé, ou une couche de la paroi d'un récipient.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60685096 B
- US 4501781 A
- US 5021515 A
- US 5049624 A
- US 5639815 A
- US 5529833 A

- US 6406766 B
- US 6558762 B
- US 6346308 B
- US 6365247 B
- US 6083585 A
- WO 2005110694 A